Europäisches Patentamt

European Patent Office

Office européen des brevets

(11) Numéro de publication : **0 452 186 B1**

# FASCICULE DE BREVET EUROPEEN

(45) Date de publication du fascicule du brevet :
**22.12.93 Bulletin 93/51**

(51) Int. Cl.$^5$ : **B29C 37/00, B29C 33/58**

(21) Numéro de dépôt : **91400845.3**

(22) Date de dépôt : **28.03.91**

(54) **Procédé pour l'obtention de blocs d'autoadhésifs thermofusibles à surface non collante.**

Le dossier contient des informations techniques présentées postérieurement au dépôt de la demande et ne figurant pas dans le présent fascicule.

(30) Priorité : **02.04.90 FR 9004154**

(43) Date de publication de la demande :
**16.10.91 Bulletin 91/42**

(45) Mention de la délivrance du brevet :
**22.12.93 Bulletin 93/51**

(84) Etats contractants désignés :
**AT BE CH DE DK ES FR GB GR IT LI LU NL SE**

(56) Documents cités :
**WO-A-84/03457**
**WO-A-84/03468**
**WO-A-88/10154**
**FR-A- 2 601 616**

(73) Titulaire : **CECA S.A.**
**4 - 8, Cours Michelet La Défense 10**
**F-92800 Puteaux (FR)**

(72) Inventeur : **Colombani, Jean-Jacques**
**13, allée de la Bichonnerie**
**F-78610 Auffargis (FR)**

(74) Mandataire : **Haicour, Philippe**
**ELF ATOCHEM S.A., D.P.I. 4-8, Cours Michelet**
**La Défense 10 - Cédex 42**
**F-92091 Paris La Défense (FR)**

EP 0 452 186 B1

Jouve, 18, rue Saint-Denis, 75001 PARIS

## Description

La présente invention se rapporte à un procédé perfectionné pour le conditionnement d'adhésifs thermofusibles autocollants, sous forme de blocs dont la surface elle-même est dénuée de tout caractère collant et poissant.

On rappelle brièvement que les adhésifs autocollants sont des substances susceptibles de coller sur divers supports et sur elles-mêmes par simple contact, sous une pression plus ou moins forte. Ce sont des substances ou des mélanges de substances douées de propriétés visco-élastiques spécifiques, dont on pourra trouver un bon exposé par S.G. Chu, dans Visco-elastic Properties of Presure Sensitive Adhesives, Handbook of Presure Sensitive Adhesive Technology, Van Nostrano Reinhold Co. Ce sont le plus souvent des compositions à base de polymères ou d'élastomères, par exemple de caoutchouc naturel, de caoutchoucs SBR, SIS, SBS, de polychloroprène, de caoutchouc nitrile, de caoutchouc chloré, de caoutchoucs butyles, de copolymères éthylènevinylacétate, de polyétheramides, de polymères ou copolymères d'$\alpha$-oléfines, et des divers ingrédients bien connus de l'homme du métier, que sont les résines tackifiantes, les cires, les plastifiants, et autres ingrédients ordinaires de formulation.

Ces compositions sont recherchées pour leur double caractéristique spécifique qui est de présenter un fort pouvoir collant instantané à l'état fondu (on parle de tack) et de conserver un pouvoir collant superficiel lors de leur retour à l'état figé. Ce dernier comportement est évidemment désavantageux pour la manipulation et le stockage des blocs, pains, lingots et autres formes individuelles de conditionnement de ces autoadhésifs.

On connaît quelques procédés pour remédier à cet inconvénient. Il y a tout d'abord les solutions banales qui consistent en l'utilisation d'emballages détachables et jetables des blocs d'autoadhésifs avec des feuilles ou des films d'une matière sur laquelle la propriété collante de l'autoadhésif ne se développe pas : emballage des blocs individuels préformés avec des feuilles, coulage de l'autoadhésif fondu dans des boîtes, coulage de l'autoadhésif dans des moules récupérables préalables revêtus d'une feuille d'une telle matière. Elles ont tous les inconvénients des systèmes à emballage perdu, et celui de la manipulation des blocs d'autoadhésifs qui après déballage reste celle de blocs à surface poisseuse.

D'autres procédés mettent en oeuvre une couche protectrice en une matière qui suit à l'utilisation le sort de l'autoadhésif, les plus intéressants étant les procédés dans lesquels on coule l'autoadhésif dans un moule préalablement foncé avec une telle matière. On connaît ainsi le procédé de coulage de l'autoadhésif en moules préalablement poudrés, et dont l'enveloppe poudrée est obtenue et maintenue cohérente par des moyens électrostatiques, décrit dans la demande de brevet français publiée sous le N° 2 541 930; on connaît aussi le procédé de coulage de l'autoadhésif dans un moule revêtu d'un voile de substance thermoadhésive elle-même non autoadhésive, décrit dans la demande de brevet français publiée sous le N° 2 601 616. On rencontre, pour l'un les difficultés de mise en oeuvre d'un procédé électrostatique qui au surplus ne fonctionne pas pour la protection de la surface de coulée, pour l'autre des problèmes d'élimination des bavures sur les blocs finis d'autoadhésifs, et l'encrassement des machines par les filaments qui s'échappent lors de la formation du voile de thermoadhésif.

La demanderesse a maintenant inventé un procédé qui remédie à ces inconvénients, et qui consiste à couler la matière thermoadhésive autocollante dans un moule préalablement revêtu d'une toilette constituée d'une substance thermoadhésive non autoadhésive filée. Pour obtenir ce résultat, on délivre à l'état fondu la matière thermoadhésive non autocollante à travers une buse, laquelle, à la différence des buses jusqu'à présent employées dans cet usage, ne brise pas la matière projetée en microjets multiples, mais au contraire la distribue sous forme d'un fil monobrin. L'invention consiste ainsi en un procédé pour la fabrication par coulée de blocs de substance autoadhésive thermofusible à surfaces dépourvues de pouvoir collant et de pouvoir d'autoagglomération sous faible pression, qui comprend la coulée de ladite substance autoadhésive dans un moule dont les parois ont été préalablement revêtues d'un voile d'une substance adhésive thermofusible non autoadhésive et la protection ultérieure de la surface de moulage restée libre à l'aide d'un voile également de substance adhésive thermofusible non autoadhésive, et dont la caractéristique tient en ce que les voiles thermofusibles de protection sont obtenus par filage de la substance thermoadhésive non autoadhésive.

Des buses de filage perfectionnées sont préférées pour la réalisation de l'invention: ce sont des buses, connues sous le nom de buses de fibérisation, dont la structure est telle quelles émettent un filet de matière fondue monobrin animé d'un mouvement circulaire. On les trouve décrites par exemple dans la demande de brevet européen n° 224 855 (Meltex Verbindungs).

La buse de filage se déplace au dessus de la surface du moule en parcourant une onde telle que le moule se trouve revêtu d'une rosace épicycloïdale de matière thermoadhésive non autocollante, après refroidissement complet de laquelle, la substance thermofusible autocollante est coulée dans le moule. La surface libre du bloc moulé, refroidi dans son moule, est à son tour protégée selon le même principe. On peut dès lors démouler un bloc totalement dépourvu de propriété poissante, qui peut dès lors être conditionné et manipulé sans

2

précaution particulière.

La constitution particulière des enveloppes protectrices selon l'invention offre ne nombreux avantages. Tout d'abord, celui d'une très grande précision dans les limites géométriques de cette enveloppe. On peut donc délimiter très exactement la partie revêtue du moule et la faire coïncider avec le niveau de remplissage que l'on a choisi par avance. Avec les procédés de protection par enduisage par pulvérisation d'adhésif thermofusible non autocollant, la protection par thermoadhésif non collant déborde largement des limites de remplissage : le bloc brut de coulage se présente avec des barbes de double épaisseur (celles de l'enduction du moule et celles de la post-protection de la surface libre), qu'il est difficile ou coûteux (par exemple l'ébarbage cryogénique) d'éliminer d'une manière industrielle automatisée. Le système selon l'invention supprime radicalement ce problème d'ébarbage des blocs. Accessoirement, il supprime tout aussi radicalement le problème causé par le débordement inévitable de la pulvérisation hors des moules et la nécessité de leur nettoyage systématique sans laquelle antérieurement la salissure de l'outil de fabrication finissait par entraver son fonctionnement.

Le choix possible du niveau de remplissage est un avantage substantiel par rapport aux systèmes de protection par poudrage électrostatique. Dans ces systèmes, le remplissage des moules est imposé à niveau constant, puisqu'on élimine la surface libre collante des blocs en les accolant par paires, par repliage de deux moules autour d'une charnière commune. Ce qui implique évidemment que le thermoadhésif autocollant affleure dans chacun des moules : il en résulte que selon les qualités d'autocollant, la densité de la composition variant, le poids des blocs n'est pas constant, et c'est là une gêne considérable, tant pour la commercialisation que pour l'utilisation des blocs dans l'alimentation des systèmes de collage automatisés.

Le procédé selon l'invention apporte aussi une solution élégante au problème du démoulage des blocs lors de leur fabrication. On choisit la matière avec laquelle on procède à l'enduisage du moule, certes pour assurer une qualité non poissante du bloc de thermoadhésif, mais en partie aussi pour sa qualité d'agent de démoulage. Cependant, quelle que soit cette aptitude à faciliter le démoulage, il n'en reste pas moins que la matière même du thermoadhésif n'est pas dénuée d'une certaine souplesse, et l'extraction du bloc hors de son moule est parfois rendue difficile parce que le moule exerce une force de succion sur une matière qui répond par une certaine déformation à toute tentative d'extraction. La ténacité du voile superficiel réalisé selon l'invention, et en particulier celle des rosaces épicycloïdales de la surface de moulage, permet l'extraction des blocs par ventousage, système inapplicable sur les blocs moulés selon l'art antérieur qui ne résistent pas à l'arrachement superficiel.

Cette ténacité de la couche protectrice filée participe en outre au frettage de la masse du bloc, lequel peut ainsi être constitué de matière autoadhésive très élastique, qui se déforme relativement peu par manipulation. Par ailleurs, le filage de l'enveloppe protectrice permet un dosage très précis de la matière de protection, et sa répartition très homogène. On estime que le poids relatif de cette enveloppe ne doit pas dépasser 1,5% de la masse du bloc. Le système selon l'invention peut dès lors économiser la matière d'enrobage. Ce que l'on économise peut être utilement employé au renforcement du feston. On peut ainsi faire des bloc avec des formulations de matière très déformable, jusqu'à présent inaccessibles au conditionnement libre.

Un avantage secondaire, cependant non négligeable, est attaché à la précision de l'enduisage: elle permet un marquage des diverses qualités de thermoadhésif en jouant sur la couleur du thermoadhésif non autocollant utilisé au cours des différentes phases de la formation de l'enveloppe protectrice.


EXEMPLES


Exemple 1

On décrit ci-après un mode particulier de fabrication selon l'invention de blocs de thermoadhésifs autocollants. Pour suivre la description de l'exemple, on se reportera aux figures.

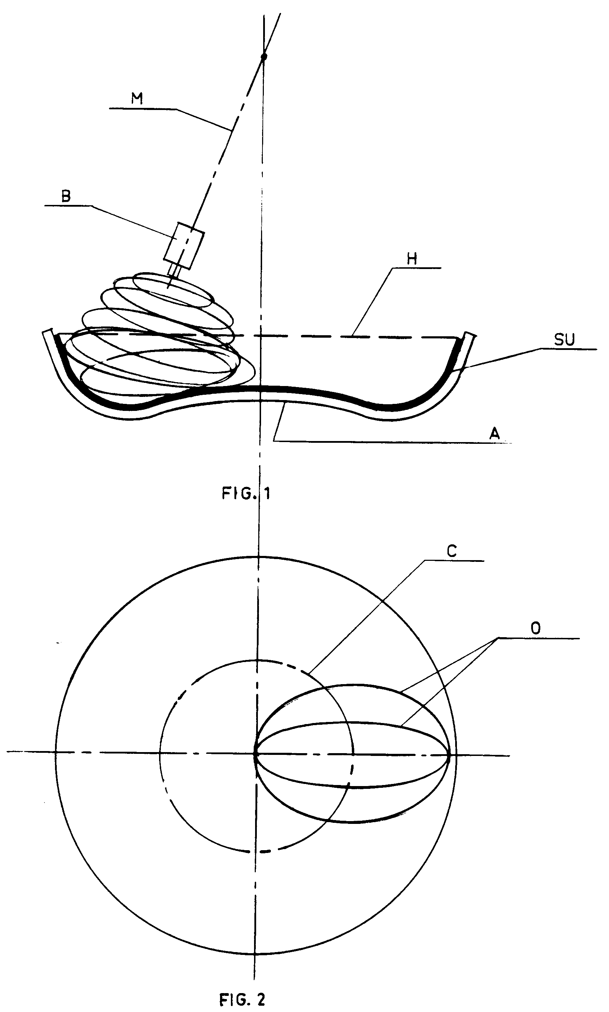

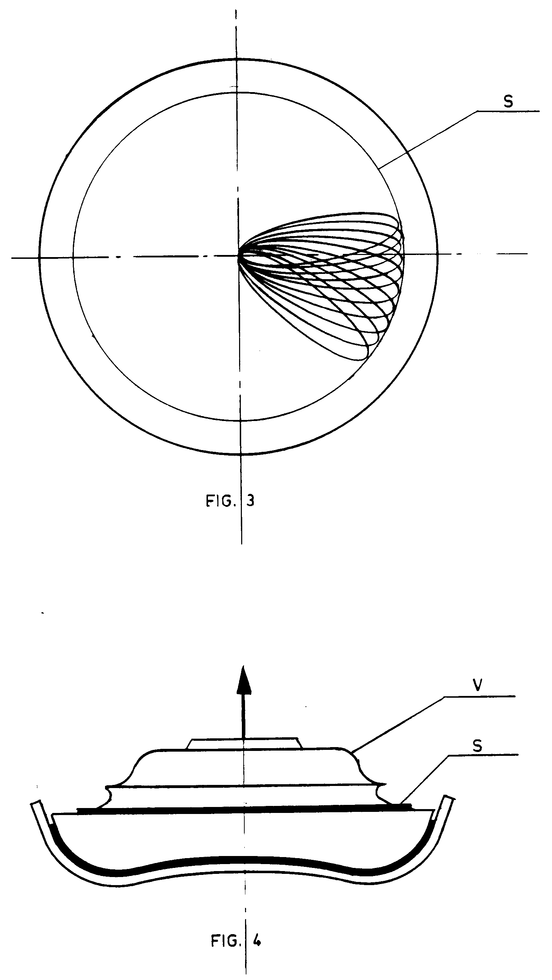

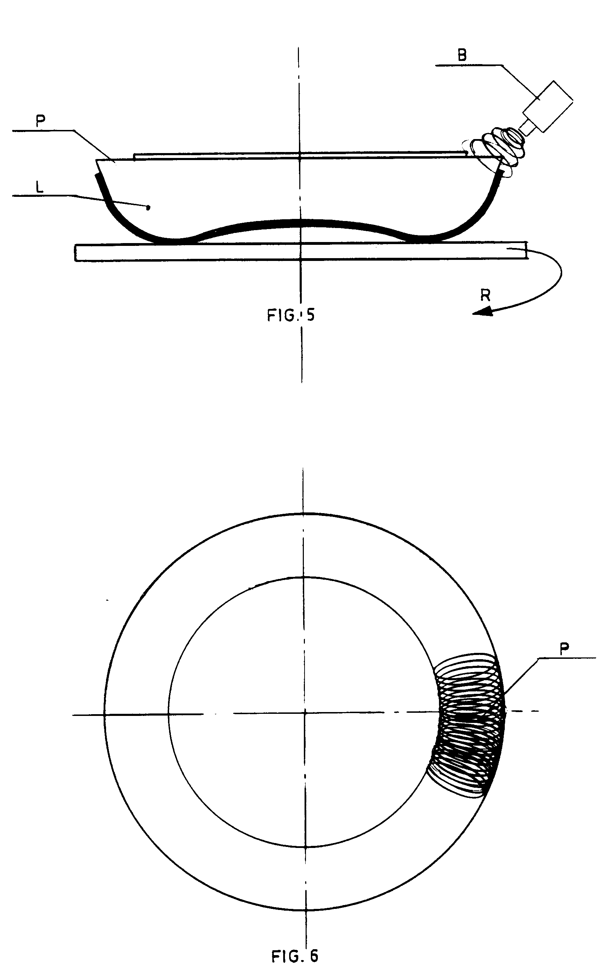

a) Enduction des moules (figures 1 et 2).

Les moules sont des coupes à fond bombé vers l'intérieur (A), d'un diamètre d'environ 150 mm. On fixe la hauteur (H) de remplissage en fonction du poids que l'on a choisi pour chaque bloc ; par exemple 0,5 kg.

La buse de filage (B), alimentée en thermoadhésif non autoadhésif fondu, est ici une buse de fibérisation Meltex SK 47, montée sur un dispositif mobile (M) animé d'un mouvement circulaire (C) centré sur l'axe du moule. Le mouvement de la buse est réglé de façon à ce qu'elle parcoure toute la surface utile (SU) du moule à ± 1 mm de la limite (H) prévue pour le remplissage, en délivrant un fil de colle dont le point de contact avec la surface du moule peut décrire des cercles ou des ovales plus ou moins aplatis (O) selon l'inclinaison de l'axe M de la buse.

b) Coulée du bloc.

Après le temps nécessaire à ce que revêtement ait pris une rigidité suffisante (on constate alors que l'on peut séparer du moule une calotte tenace de thermoadhésif non autoadhésif), on procède au remplissage du moule par coulée du thermoadhésif autocollant fondu jusqu'au niveau (H).

c) Protection de la surface du bloc et extraction (figures 3 et 4).

Après refroidissement total de la masse, on recouvre la surface libre d'une nappe de thermoadhésif non autoadhésif filé. Pour ce faire, on limite la périphérie du revêtement protecteur de surface en retrait de la paroi du moule, à environ 0,5 cm (S). On abandonne encore une fois le moule rempli et surfacé au refroidissement et on procède à l'extraction du bloc à l'aide d'une ventouse (V) dont la surface de contact avec le bloc est un peu plus petite que celle de la surface revêtue de thermoadhésif filé (S).

d) Finition du bloc. (figures 5 et 6)

On a obtenu un bloc circulaire (L) qui colle encore par le pourtour (P) de sa surface supérieure à une certaine distance du bord, et dont il convient maintenant de terminer la protection. Pendant les opérations précédentes, le moule était fixe, tandis que la buse de filage était animée d'un mouvement circulaire. Dans l'opération qui suit, le dispositif de positionnement de la buse de filage est fixe, et c'est le bloc qui, placé sur une platine tournante, est entraîné dans un mouvement de rotation (R). La périphérie (P) du bloc défile sous la buse, ici une buse de fibérisation Meltex SK 34, fixe, dont on a réglé l'angle d'attaque. On brode ainsi un galon de thermoadhésif non autocollant sur la bande périphérique (P) non encore couverte, ce qui a également pour effet, étant donnée l'élévation de température superficielle qui en résulte, de fondre l'excès d'environ 2 mm de voile protecteur en une sorte de couture. On obtient ainsi un bloc d'autoadhésif absolument protégé, sans aucune barbe ni aucune zone se prêtant à l'autocollage.

Cet exemple n'est pas limitatif du procédé selon l'invention. Notamment, d'autres mouvements que des mouvements simplement circulaires peuvent être imposés à la buse, par exemple des mouvements épicycloïdaux lorsque la buse est une buse de filage simple. On peut combiner d'autres mouvements relatifs de la buse et du moule ou du bloc pour parvenir au résultat de l'invention. La forme des blocs n'est pas limitée uniquement à des coupes ou des galettes cylindriques. On peut également utiliser des buses de filage à plusieurs sorties, qui présentent l'avantage de ne pas concentrer de colle non autoadhésive au centre du fond du bloc et au centre de la surface de coulée.

Exemple 2

On applique le procédé décrit à l'exemple 1 à une formulation d'autoadhésif pour palettisation. On entend par adhésifs de palettisation, des compositions autoadhésives à déposer de façon très locale sur l'extérieur de sacs remplis que l'on empile sur des palettes pour en faciliter la manipulation et le transport, notamment par chariots élévateurs. Le problème est d'éviter que les sacs ne glissent les uns sur les autres : on atteint ce résultat en déposant des films de quelques centimètres carrés ou quelques points de colle sur l'extérieur de ces sacs, étant bien entendu que la colle est choisie avec des caractéristiques telles qu'il n'y ait pas arrachement de la paroi des sacs lors de leur désempilement. Une composition typique de thermoadhésif de palettisation est la suivante:

```
Copolymère éthylène/vinylacétate
    à 33% de vinylacétate                    17
Résine terpène phénolique                    15
Résine colophane pentaérhytrol ester         45
Dioctylphtalate                              23
```

Il s'agit d'un thermoadhésif mou, dont le point de ramollissement bille-anneau (norme AFNOR NF T 66-008) est d'environ 60°C. Tous les thermoadhésifs dits mous, et que l'on peut définir comme étant des adhésifs dont le point bille et anneau est compris entre 50 et 75°C, et qui accusent sous leur propre poids une déformation permanente en une journée, ne peuvent être conditionnés qu'en barquettes rigides ou semi-rigides, sans quoi ils se déforment, voire se brisent à la manipulation. Leur enrobage par des voiles de thermofusibles selon le brevet français n° 2 601 616 ne permet pas de ménager leur intégrité à la manipulation, à plus forte raison, en est-il de leur protection par poudrage selon le brevet français n° 2 541 930.

Des galettes formées simplement avec le thermoadhésif de palettisation ci-dessus ne sont manipulables et transportables que dans les barquettes dans lesquelles elles ont été coulées. Leur protection par voile de thermoadhésif à l'aide de la matière et dans les conditions de l'exemple 3 du brevet français n° 2 601 616 n'est pas possible, car le produit s'arrache au moment de l'extraction de son moule de l'invention , en suivant le mode opératoire décrit dans l'exemple 1 ci-dessus, avec le même thermoadhésif non autocollant ne fluent pas sensiblement sous leur propre poids, supportent sans se coller un empilement de six galettes sans feuilles de protection intercalaires, et sont manipulables dans des conditions normales sans déformation excessive ni fragmentation et sans que se fendille leur enveloppe de thermoadhésif filé.

**Revendications**

1. Procédé pour la fabrication par coulée de blocs de substance autoadhésive thermofusible à surfaces dépourvues de pouvoir collant et de pouvoir d'autoagglomération sous faible pression, qui comprend la coulée de ladite substance autoadhésive dans un moule (A) dont les parois ont été préalablement revêtues d'un voile d'une substance adhésive thermofusible non autoadhésive et la protection ultérieure de la surface de moulage restée libre à l'aide d'un voile également de substance adhésive thermofusible non autoadhésive, caractérisé en ce que les voiles thermofusibles de protection sont obtenus par filage de la substance thermoadhésive non autoadhésive.

2. Procédé pour la fabrication par coulée de blocs de substance autoadhésive thermofusible selon la revendication 1, caractérisé en ce que les voiles de protection ont une structure de rosace épicycloïdale.

3. Procédé pour la fabrication par coulée de blocs de substance autoadhésive thermofusible selon la revendication 2, caractérisé en ce que les blocs de substance autoadhésive thermofusible munis d'un voile protecteur de substance thermoadhésive non autoadhésive filée, sont en outre munis d'un galon périphérique supplémentaire (P) de substance thermoadhésive non autoadhésive filée.

4. Procédé pour la fabrication par coulée de blocs de substance autoadhésive thermofusible selon les revendications 1, 2 ou 3, caractérisé en ce que les buses de filage de la substance thermoadhésive de protection sont des buses de fibérisation (B).

5. Procédé pour la fabrication par coulée de blocs de substance autoadhésive thermofusible selon les revendications 1 et 2, caractérisé en ce que les blocs de substance autoadhésive thermofusible après formations de leurs voiles protecteurs filés sont extraits de leurs moules de coulée par ventousage.

6. Blocs de substance autoadhésive thermofusible revêtus d'un voile protecteur de substance thermoadhésive non autoadhésive, caractérisés en ce que leur voile thermofusible de protection est obtenu par filage de la substance thermoadhésive non autoadhésive et qu'ils sont constitués d'un thermoadhésif autoadhésif mou dont le point de ramollissement bille et anneau est compris entre 50 et 75°C.

**Patentansprüche**

1. Gießverfahren zur Herstellung von Blöcken aus hitzeschmelzbarer selbstklebender Substanz mit Oberflächen ohne Klebe- und Selbstanlagerungsvermögen bei schwachem Druck, bestehend aus dem Gießen der genannten selbstklebenden Substanz in eine Gußform (A), deren Wände zuvor mit einer nicht selbstklebenden wärmeschmelzbaren adhäsiven Substanzschicht bedeckt wurden, und dem späteren Schutz der frei gebliebenen Gußteiloberfläche mit Hilfe einer ebenfalls nicht selbstklebenden wärmeschmelzbaren adhäsiven Substanzschicht, dadurch gekennzeichnet, daß die wärmeschmelzbaren Schutzschichten durch Spinnen der nicht selbstklebenden unter Wärmeeinfluß klebenden Substanz erhalten werden.

2. Gießverfahren zur Herstellung von Blöcken aus wärmeschmelzbarer selbstklebender Substanz nach Anspruch 1, dadurch gekennzeichnet, daß die Schutzschichten die Form einer Epicycloidenrosette aufweisen.

3. Gießverfahren zur Herstellung von Blöcken aus wärmeschmelzbarer selbstklebender Substanz nach Anspruch 2, dadurch gekennzeichnet, daß die Blöcke aus wärmeschmelzbarer selbstklebender Substanz, die mit einer Schutzschicht aus gesponnener nicht selbstklebender wärmeschmelzbarer Substanz ausgerüstet sind, außerdem mit einem zusätzlichen äußeren Band (P) einer gesponnenen nicht selbstklebenden unter Wärmeeinfluß klebenden Substanz versehen sind.

4. Gießverfahren zur Herstellung von Blöcken aus wärmeschmelzbarer selbstklebender Substanz nach den Ansprüchen 1, 2 und 3, dadurch gekennzeichnet, daß die Spinndüsen für die unter Wärmeeinfluß klebende Schutzsubstanz Faserdüsen (B) sind.

5. Gießverfahren zur Herstellung von Blöcken aus wärmeschmelzbarer selbstklebender Substanz nach den Ansprüchen 1 und 2, dadurch gekennzeichnet, daß die Blöcke aus wärmeschmelzbarer selbstklebender Substanz nach Ausbildung ihrer gesponnenen Schutzschichten aus ihren Gießformen über Saugansätze entfernt werden.

6. Blöcke aus wärmeschmelzbarer selbstklebender Substanz, beschichtet mit einer Schutzschicht aus einer nicht selbstklebenden unter Wärmeeinfluß klebenden Substanz, dadurch gekennzeichnet, daß ihre wärmeschmelzbare Schutzschicht durch Spinnen der nicht selbstklebenden Substanz erhalten wird und daß sie aus einem weichen selbstklebenden Wärmehaftmittel bestehen, deren Kugel- und Ringerweichungspunkt zwischen 50 und 75°C liegt.

## Claims

1. Process for the manufacture by casting of blocks of hot-melt pressure-sensitive adhesive substance with surfaces devoid of adhesiveness and of autoagglomeration power at low pressure, which comprises casting the said pressure-sensitive substance in a mould (A) the walls of which have been precoated with a veil of a nonpressure-sensitive hot-melt adhesive substance and the subsequent protection of the moulding surface remaining free with the aid of a veil also of nonpressure-sensitive hot-melt adhesive substance, characterised in that the protective hot-melt veils are obtained by spinning the nonpressure-sensitive thermally adhesive substance.

2. Process for the manufacture by casting of blocks of hot-melt pressure-sensitive adhesive substance according to Claim 1, characterised in that the protective veils have an epicycloidal roselike structure.

3. Process for the manufacture by casting of blocks of hot-melt pressure-sensitive adhesive substance according to Claim 2, characterised in that the blocks of hot-melt pressure-sensitive adhesive substance provided with a protective veil of spun nonpressure-sensitive thermally adhesive substance are additionally provided with a supplementary peripheral binding (P) of spun nonpressure-sensitive thermally adhesive substance.

4. Process for the manufacture by casting of blocks of hot-melt pressure-sensitive adhesive substance according to Claims 1, 2 or 3, characterised in that the spinnerettes for the protective thermally adhesive substance are fibre-forming spinnerettes (B).

5. Process for the manufacture by casting of blocks of hot-melt pressure-sensitive adhesive substance according to Claims 1 and 2, characterised in that the blocks of hot-melt pressure-sensitive adhesive substance, after forming of their spun protective veils, are extracted from their casting moulds by a suction process.

6. Blocks of hot-melt pressure-sensitive adhesive substance coated with a protective veil of nonpressure-sensitive thermally adhesive substance characterised in that their protective hot-melt veil is obtained by spinning the nonpressure-sensitive thermally adhesive substance and that they consist of a soft pressure-sensitive thermal adhesive whose ring-and-ball softening point is between 50 and 75°C.

M

B

H

SU

A

FIG. 1

C

O

FIG. 2

FIG. 3

FIG. 4

8

FIG. 5

FIG. 6